# EUROPÄISCHE PATENTSCHRIFT

(11) **EP 1 595 076 B1**
(45) Veröffentlichungstag und Bekanntmachung des Hinweises auf die Patenterteilung: **15.08.2012**
(21) Anmeldenummer: 03775316.7
(22) Anmeldetag: 07.11.2003
(51) Int. Cl.: F03D 11/00, F03D 9/00

(54) **WINDENERGIEANLAGE MIT STROMSCHIENEN**
WIND ENERGY INSTALLATION COMPRISING CONDUCTOR RAILS
EOLIENNE A BARRES CONDUCTRICES

(30) Priorität: 12.02.2003 DE 10305689
(43) Veröffentlichungstag der Anmeldung: 16.11.2005
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2003/012446
(87) Internationale Veröffentlichungsnummer: WO 2004/072474

(56) Entgegenhaltungen:
- EP-A- 0 959 546
- WO-A-03/036084
- DE-A- 4 325 570
- DE-C- 10 013 442
- DE-C- 19 962 453
- DE-U- 9 417 738
- US-A- 3 768 016
- US-A- 5 063 473
- US-A- 5 506 453
- US-A1- 2002 012 582
- PERNPEINTNER R: "OFFSHORE SITING OF LARGE WIND ENERGY CONVERTER SYSTEMS IN THE GERMAN NORTH SEA AND BALTIC REGIONS" MODERN POWER SYSTEMS, WILMINGTON PUBLISHING, WILMINGTON, GB, Bd. 4, Nr. 6, Juni 1984 (1984-06), Seiten 33-40, XP001014353 ISSN: 0260-7840

## Beschreibung

Die Erfindung betrifft eine Windenergieanlage mit einem aus mehreren Turmsegmenten aufgebauten Turm, mit einem im Bereich des Turmkopfes angeordneten Generator zur Stromerzeugung, mit einem Leistungsmodul und mit Stromleitungsmitteln zur Stromableitung des erzeugten Stroms aus dem Turmkopf. Solche Windenergieanlagen sind beispielsweise aus der DE 10 152 557 bekannt.

Das elektrische Leistungsmodul einer Windenergieanlage, das elektrische Einheiten wie Transformator, Schaltschränke, ggf. Wechselrichter, Mittelspannungsanlage, Niederspannungsverteilung usw. umfasst, ist bei bekannten Windenergieanlagen unterhalb der Generatorebene und häufig im Bereich des Turmfußes des Turmes der Windenergieanlage angeordnet. Dafür bzw. für einige dieser Komponenten ist meist ein eigenes kleines Gebäude außerhalb der Windenergieanlage vorgesehen. Um die von dem im Bereich der Turmspitze innerhalb einer Gondel angeordneten Generator erzeugte elektrische Energie zum Leistungsmodul zu übertragen, sind Stromleitungsmittel vorgesehen, die zumeist innerhalb des Turmes verlaufen und in Form von Kabeln ausgestaltet sind. Diese Kabel werden in den Turm eingebracht. nachdem dieser aufgestellt ist. Dies ist ein aufwändiges Verfahren, da die Kabel über die gesamte Turmhöhe in einem separaten Arbeitsgang installiert werden müssen. Weiterhin ist dieser Arbeitsgang von der vorherigen Errichtung des Turmes abhängig.

Es ist jedoch nicht zwangsläufig erforderlich, das Leistungsmodul (vollständig) im Bereich des Turmfußes anzuordnen. Auch andere Positionen sind grundsätzlich denkbar. Die Stromleitungsmittel müssen deshalb im wesentlichen den Zweck erfüllen, den im Bereich des Turmkopfes erzeugten und ggf. vorverarbeiteten Strom aus dem Turmkopf abzuführen.

Der vorliegenden Erfindung liegt die Aufgabe zugrunde, eine Windenergleanlage anzugeben, die sich einfacher und damit auch günstiger und schneller errichten lässt, und bei der nicht zwingend ein Leistungsmodul im Bereich des Turmfußes erforderlich ist.

Diese Aufgabe wird erfindungsgemäß dadurch gelöst, dass die Stromleitungsmittel segmentiert in den Turmsegmenten vormontiert sind und dass das Leistungsmodul wenigstens teilweise im Bereich des Turmkopfes angeordnet ist,

Die Segmente der Stromleitungsmittel sind somit vorgefertigt und werden an den Turmsegmenten angebracht, bevor aus den einzelnen Turmsegmenten der Turm errichtet wird. Es ist somit nicht mehr erforderlich, nach Errichtung des Turmes aufwändig Kabel durch den Turm zu ziehen. Durch die erfindungsgemäßen Maßnahmen lassen sich die gesamte Errichtungszeit der Windenergleanlage verkürzen und die Kosten für die Errichtung verringern, ohne dass irgendwelche technischen Nachteile In Kauf genommen werden müssten.

Um ein im Bereich des Turmfußes angeordnetes Leistungsmodul zu vermeiden, wird außerdem vorgeschlagen, das Leistungsmodul wenigstens teilweise im Bereich des Turmkopfes anzuordnen. Bevorzugt ist dabei vorgesehen, dass das Leistungsmodul - teilweise oder vollständig - innerhalb der Gondel angebracht ist. In einer weiteren bevorzugten Ausgestaltung ist vorgesehen, dass das Leistungsmodul wenigstens zwei Leistungsmoduleinheiten aufweist, von denen die eine im Bereich des Turmkopfes und die andere unterhalb des Turmkopfes, also im Bereich des Turmfußes oder entfernt vom Turmfuß, angeordnet ist. Die Stromleitungsmittel sind dann im wesentlichen dazu vorgesehen, die beiden Leistungsmoduleinheften zu verbinden.

Weitere vorteilhafte Ausgestaltungen der erfindungsgemäßen Windenergleanlage sind in den Unteransprüchen angegeben. Bevorzugt ist vorgesehen, dass die Segmente der Stromleitungsmittel nur in einem Bereich, vorzugsweise im in aufgebautem Zustand obersten Bereich, mit den zugehörigen Turmsegment fest verbunden sind. Diese Befestigung mit dem Turmsegment erfolgt bevorzugt vor Errichtung des Turmes, so dass die Turmsegmente inklusive der daran befestigten Segmente der Stromleitungsmittel vorgefertigt werden. Da das Segment der Stromleitungsmittel nur an einem Punkt an dem Turm fest angebracht ist, hängt es zwar fest, aber doch in gewissen Grenzen beweglich an der Innenwand des Turmsegmentes und kann somit noch ausgerichtet werden, um möglichst einfach und gut mit den nächsten Segmenten der Stromleitungsmittel des nächsten Turmsegmentes verbunden zu werden.

Zur weiteren Befestigung der Segmente der Stromleitungsmittel innerhalb des Turmsegments können allerdings auch noch zusätzliche Halteelemente an der Innenwand des Turmes vorgesehen sein, mit denen die Segmente der Stromleitungsmittel vor oder nach Errichtung des Turmes fest verbunden werden, um diese möglichst gut zu fixieren.

Wenn die Stromleitungsmittel als Kabel ausgebildet sind, können für die Überbrückung von Flanschen oder aus der Turminnenwand herausstehenden Teilen die Längen der Kabelabschnitte in den Turmsegmenten so bemessen sein, dass eine Überbrückung dieser Bereiche problemlos möglich ist.

Bei der Verwendung von Stromschienen als Stromleitungsmitteln können zur Überbrückung von aus der Innenwand des Turmes herausstehenden Teilen und/oder zur Verbindung von Stromschienensegmenten bevorzugt flexible Verbindungsschienen vorgesehen sein. Diese werden nach Errichtung des Turmes dazu verwendet, die Stromschienensegmente zu verbinden, sofern diese nicht unmittelbar aneinander reichen oder falls Lücken oder sonstige Hindernisse zwischen den Stromschienensegmenten beispielsweise ein Flansch am Turmschienensegment überbrückt werden muss.

Um einerseits das Wartungspersonal beim Besteigen des Turmes durch dessen Innenraum vor Kontakt mit den Stromschienen zu schützen und eine elektrische Isolierung zu gewährleisten und andererseits die Stromleitungsmittel vor Beschädigungen zu schützen, ist in einer weiteren Ausgestaltung eine Schutzhülle, insbesondere ein Schutzblech, vorgesehen, das beispielsweise fest mit der Innenwand des Turmes verbunden ist und die Stromleitungsmittel vollständig vor Berührungen schützt. Auch diese Schutzhülle kann in einzelne Segmente aufgeteilt sein, die ebenso wie die Segmente der Stromleitungsmittel an den Turmsegmenten vormontiert sind. Dadurch wird eine weitere Verkürzung und Vereinfachung der Errichtung der Windenergieanlage erreicht.

Die Erfindung betrifft außerdem auch ein Turmsegment für einen aus mehreren Turmsegmenten aufgebauten Turm einer Windenergieanlage, welche im Bereich des Turmkopfes einen Generator zur Stromerzeugung aufweist. Das Turmsegment ist dadurch gekennzeichnet, dass in ihm ein Stromleitungsmitteisegment zur Stromableitung des erzeugten Stroms aus dem Turmkopf vormontiert ist.

Die Erfindung wird nachfolgend anhand der Zeichnungen näher erläutert.

Es zetgen:
- Figur 1: eine Darstellung einer nicht zur Erfindung gehörigen Windenergieanlage,
- Figur 2: einen Ausschnitt einer solchen Windenergieanlage mit zwei Turmsegmenten,
- Figur 3: eine perspektivische Darstellung erfindungsgemäß vorgesehener Stromschienen,
- Figur 4: eine Darstellung einer ersten erfindungsgemäßen Windenergieanlage,
- Figur 5: eine Darstellung einer zweiten nicht zur Erfindung gehörigen Windenergieanlage und
- Figur 6: eine Darstellung einer dritten nicht zur Erfindung gehörigen Windenergieanlage.

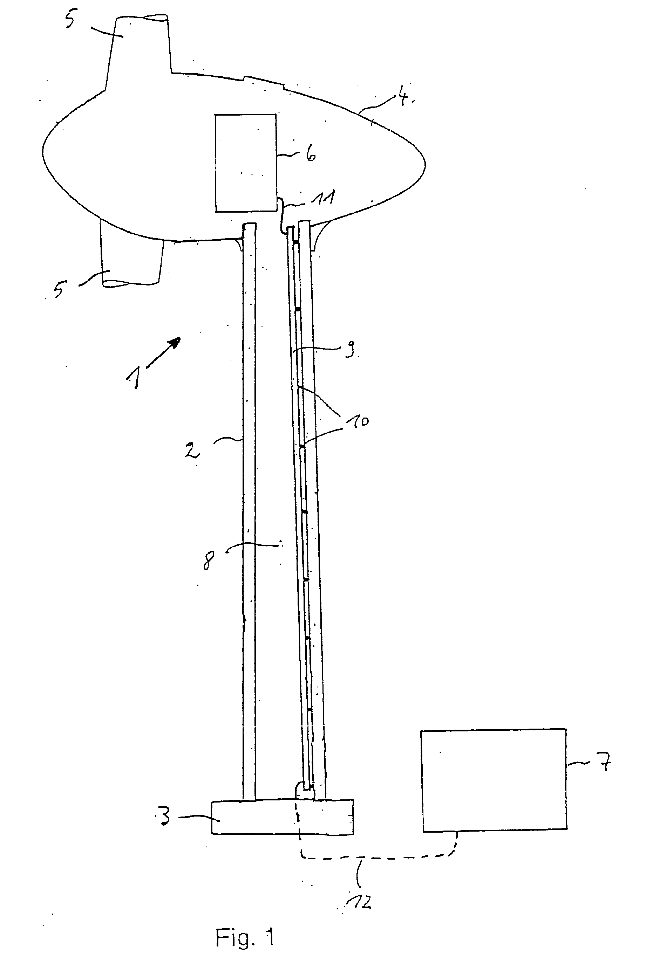

Die in Figur 1 schematisch dargestellte, in dem deutschen Patent 10 152 557 beschriebene Windenergieanlage 1 weist einen Turm 2 mit einem Fundament 3, eine im Bereich der Turmspitze drehbar gelagerte Gondel 4 sowie ein im Bereich des Turmfußes, beispielsweise in einem separaten Häuschen, angeordnetes Leistungsmodul 7 auf. Innerhalb der Gondel 4 ist ein um eine horizontale Achse drehbar gelagerter Rotor mit mehreren Rotorblättern 5 sowie ein elektrischer Generator 6 angeordnet. Durch die auf die Rotorblätter 5 wirkenden Windkräfte wird der Rotor in Drehung versetzt und treibt den Generator 6 zur Erzeugung elektrischer Energie an.

Zur Übertragung der von dem Generator 6 erzeugten Energie an das Leistungsmodul 7, das zahlreiche elektrische Einheiten aufweist, wie einen Transformator oder ggf. einen Wechselrichter zur Weiterbearbeitung des elektrischen Stromes, bevor dieser in das Netz eingespeist bzw. an einen Verbraucher weitergeleitet wird, sind im Innenraum 8 des Turmes 2 an der Wand mittels Befestigungselementen 10 angebrachte Stromschienen, vorzugsweise zwei Stromschienen, vorgesehen. Diese sind elektrisch leitend und über ein Kabel 11 mit dem Generator sowie über eine Verbindungsleitung 12, die vorzugsweise durch das Fundament 3 und den Untergrund führt, mit dem Leistungsmodul 7 elektrisch verbunden.

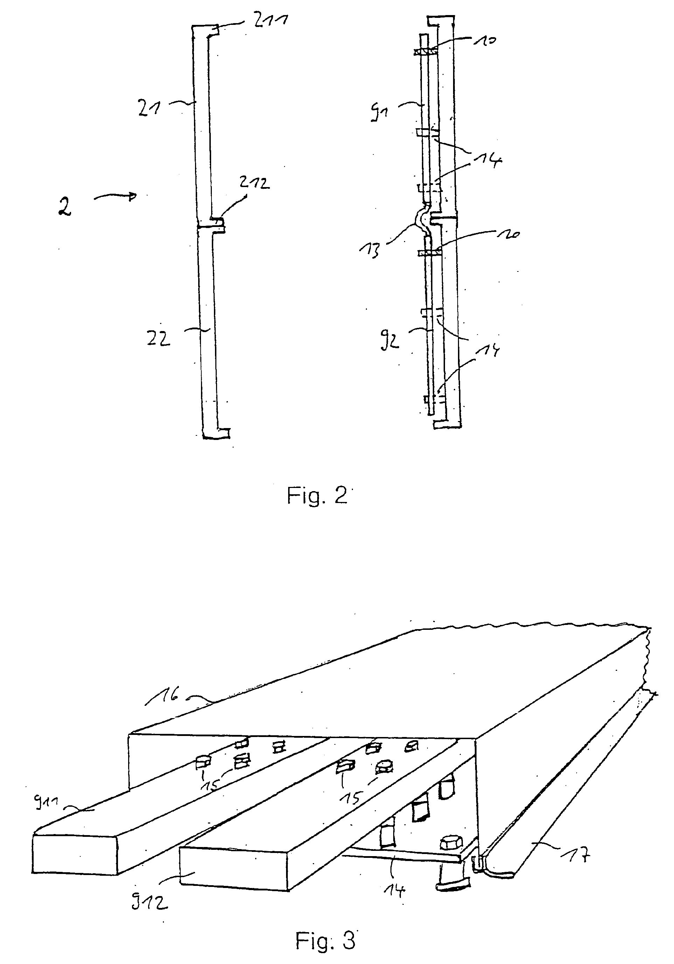

Die Stromschienen 9 sind starr ausgebildet und bestehen bevorzugt aus einzelnen Stromschienensegmenten, wie dies beispielsweise in Figur 2 näher dargestellt ist. Dort sind zwei Turmsegmente 21, 22 gezeigt, aus denen der Turm 2 bevorzugt aufgebaut wird. Solche Turmsegmente 21, 22 können beispielsweise aus Stahl oder auch aus Beton bestehen.

Diese Turmsegmente 21, 22 werden vorgefertigt und am Standort der Windenergieanlage zu dem Turm zusammengefügt. Um die Einrichtungszeit noch weiter zu verkürzen und die Arbeit zu vereinfachen und somit auch die Kosten der gesamten Windenergieanlage zu verringern, werden die Stromschienensegmente 91, 92 ebenfalls vor Errichtung des Turmes 2 an den entsprechenden Stellen der einzelnen Turmsegmente 21, 22 fest angebracht. Vorzugsweise erfolgt die Befestigung der Stromschienensegmente 91, 92 nur im oberen Bereich des jeweiligen Turmsegmentes 21, 22 mittels einer Befestigungsvorrichtung 10, während der restliche Teil der Stromschienensegmente 91, 92 noch in gewissen Grenzen beweglich ist, um die Verbindung mit nachfolgenden Stromschienensegmenten zu vereinfachen. Durch diesen Aufbau können auch Relativbewegungen zwischen dem Turm 2 und den Stromschienen 91, 92, z.B. infolge unterschiedlicher Ausdehnungskoeffizienten, ausgeglichen werden. Es kann jedoch auch vorgesehen sein, dass weitere Halteelemente 14 verwendet werden, welche die Stromschienensegmente 91, 92 auf ihrer gesamten Länge führen. Dazu kann der Querschnitt der Öffnung für die Stromschienensegmente 91, 92 in den Halteelementen 14 größer bemessen sein, als der Querschnitt der Stromschienensegmente 91, 92 selbst. Auf diese Weise wird eine Relativbewegung der Stromschienensegmente 91, 92 in den Halteelementen 14 ermöglicht und gleichzeitig werden die Stromschienen 91, 92 geführt und in ihrer Bewegbarkeit eingeschränkt.

Um die Stromschienensegmente 91, 92 elektrisch zu verbinden und dabei ggf. vorhandene, in den Innenraum vorstehende Teile, wie beispielsweise am unteren und oberen Rand der Turmsegmente 21, 22 vorhandene Flansch 211, 212 zu überbrücken, werden isolierte, flexible Verbindungsschienen 13 verwendet, deren Form sich beim Anbringen an den beiden Stromschienensegmenten 91, 92 per Hand verändern lässt. Durch diese Verbindungsschienen 13 können auch Materialausdehnungen bzw. Kontraktionen, z.B. durch Temperaturschwankungen, ausgeglichen werden.

In Figur 3 ist eine perspektivische Darstellung zweier paralleler Stromschienensegmente 911, 912 gezeigt. Diese sind mittels Schrauben 15 an der Haltevorrichtung 14 fest verschraubt. Dabei können Isoliermittel vorgesehen sein, um die Stromschienensegmente 911, 912 gegenüber den Haltevorrichtungen 14 zu isolieren. Alternativ können natürlich auch die Haltevorrichtungen 14 selbst aus einem isolierenden Material hergestellt sein. Die Haltevorrichtung 14 selbst ist fest mit der innenwand des Turmsegmentes verschraubt.

Zum Schutz vor Berührungen der Stromschienen 911, 912 beim Betrieb der Windenergieanlage ist außerdem ein Schutzblech 16 vorgesehen, das ebenfalls wie die Stromschienensegmente 911, 912 vor Errichtung des Turmes 2 in die einzelnen Turmsegmente bereits eingebaut werden kann. Mittels einer Führungsschiene 17, die beispielsweise aus einem festen Gummi bestehen kann, wird einerseits diese Schutzhülle fixiert und andererseits gegenüber dem Turmsegment isoliert. Zur Befestigung des Schutzbleches 16 können aber auch noch weitere Mittel, die vorliegend nicht gezeigt sind, vorgesehen sein.

Weiterhin können in und/oder an diesen als Schutzhüllen vorgesehenen Schutzblechen 16 weitere Einrichtungen wie Steckdosen, Leuchten, etc. angebracht werden, so dass diese ebenfalls auf einfache Weise vormontiert werden können. Außerdem vermeidet insbesondere ein Einbau dieser Einrichtungen in die Schutzhülle 16 eine exponierte Montage an der Turminnenwand und führt damit zu einer verringerten Gefahr einer Beschädigung, z.B. durch herabfallende Gegenstände während und nach der Errichtung des Turmes.

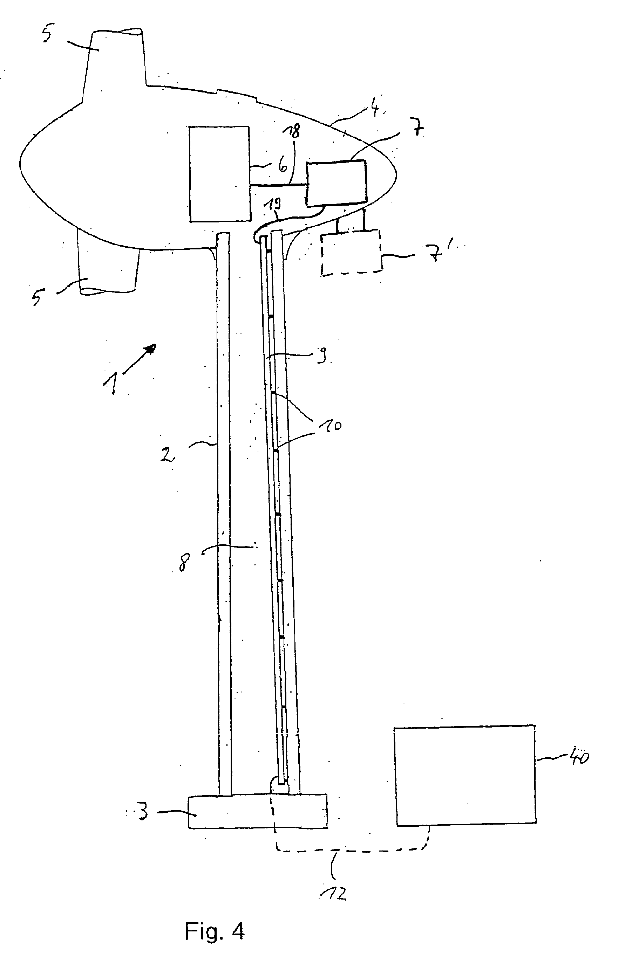

Figur 4 zeigt eine erste Ausgestaltung einer erfindungsgemäßen Windenergieanlage. Dabei ist das Leistungsmodul 7 bevorzugt innerhalb der Gondel 4 angeordnet und über Kabel 18 direkt mit dem Generator 6 verbunden. Nachdem der erzeugte Strom in dem Leistungsmodul 7 verarbeitet wurde, wird er über ein weiteres Kabel 19 an die Stromschienen 9 herangeführt, dort durch den Turm zum Turmfuß geleitet, von wo aus er über eine Verbindungsleitung 12 abgeführt wird, beispielsweise zu einer Umspannstation 40, die in der Nähe oder weit entfernt von der Windenergieanlage liegen kann. Gestrichelt ist eine alternative Lage des Leistungsmoduls 7' gezeigt, das auch außen an der Gondel 4 angebracht sein kann. Verbindungskabel vom Generator 6 zum Leistungsmodul 7' sowie von dort zu den Stromschienen 9 sind der Übersichtlichkeit halber weggelassen.

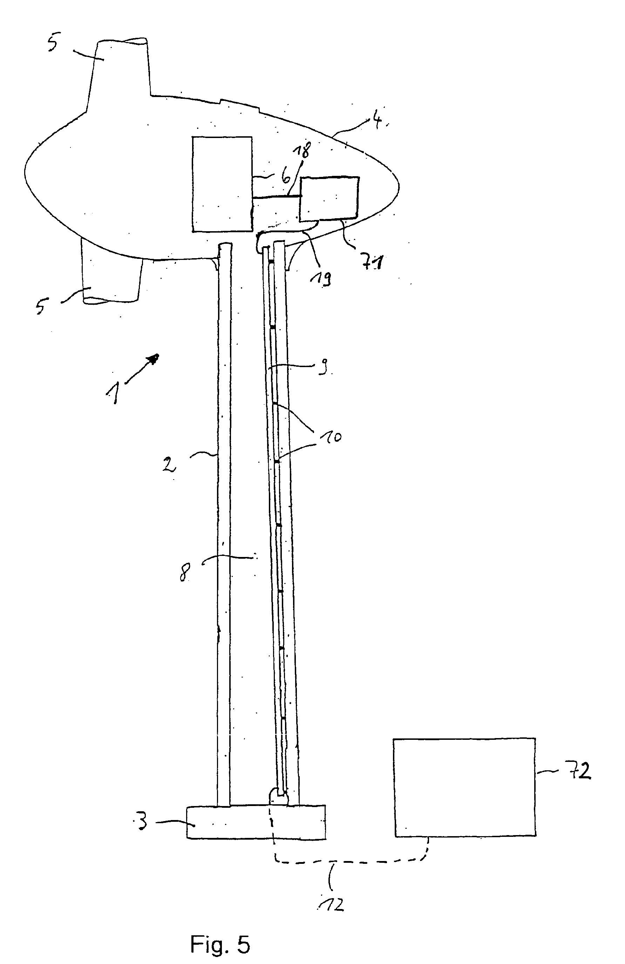

Figur 5 zeigt eine weitere nicht zur Erfindung gehörigen Windenergieanlage. Dabei besteht das Leistungsmodul aus wenigstens zwei Leistungsmoduleinheiten 71 und 72. Die erste Leistungsmoduleinheit 71 ist dabei wiederum innerhalb der Gondel 4 angeordnet und nimmt eine erste Verarbeitung des erzeugten Stroms vor, beispielsweise eine erste Transformation in einen anderen Spannungsbereich. Eine weitere Verarbeitung des erzeugten Stroms findet dann in der zweiten Leistungsmoduleinheit 72 statt, die unterhalb des Turmkopfes angeordnet ist, beispielsweise wie gezeigt im Bereich des Turmfußes. Die zweite Leistungsmoduleinheit 72 kann aber auch innerhalb des Turmes 2 auf dem Fundament 3 stehend angeordnet oder weit entfernt von dem Turmfuß angeordnet sein. Ebenso kann natürlich die erste Leistungsmoduleinheit 71 auch außen an der Gondel 4 angeordnet sein, wie in Figur 4 gezeigt ist.

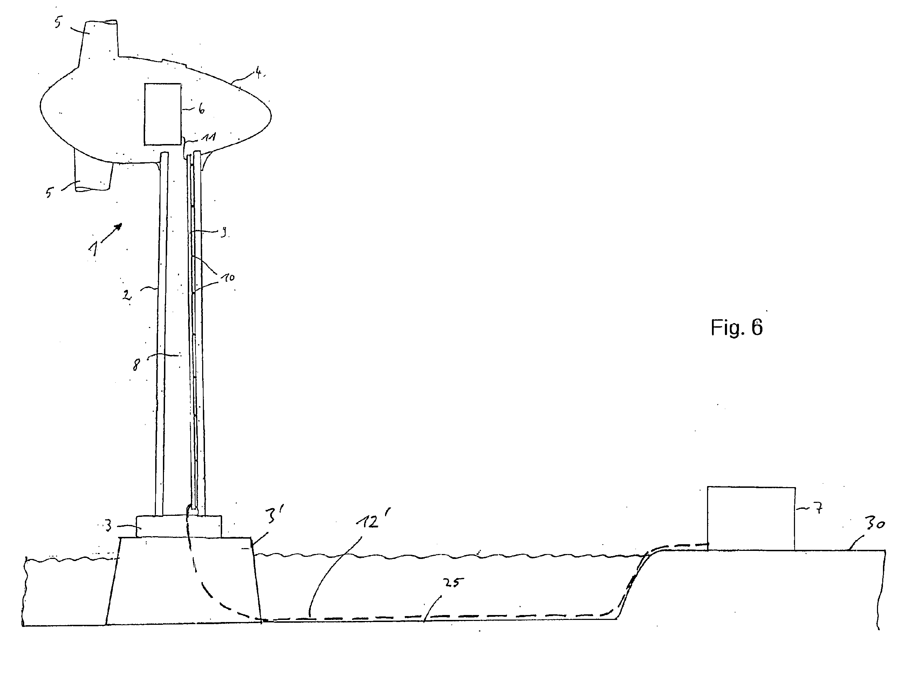

Figur 6 zeigt kleine Ausgestaltung einer erfindungsgemäßen Windenergieanlage, die als sogenannte Off-Shore-Windenergieanlage ausgebildet ist. Diese Windenergieanlage 1 steht dabei auf einem am Meeresboden 25 verankerten weiteren Fundament 3'. Zwar kann auch bei solchen Off-Shore-Windenergieaniagen das Leistungsmodul im Bereich des Turmkopfes angeordnet sein. In Fig. 6 ist jedoch vorgesehen, dass das Leistungsmodul 7 an Land 30 angeordnet ist und dass der mittels der Stromschienen 9 aus dem Turmkopf abgeführte Strom über Seekabel 12' zu dem Leistungsmodul 7 übertragen wird. Dies hat den Vorteil, dass das Leistungsmodul 7 nicht extra vor den Beeinträchtigungen des Meerwassers geschützt werden muss und dass eine Wartung des Leistungsmoduls 7 wesentlich einfacher ist.

## Patentansprüche

1. Windenergieanlage (1) mit einem aus mehreren Turmsegmenten (21, 22) aufgebautem Turm (2), mit einem im Bereich des Turmkopfes angeordneten Generator (6) zur Stromerzeugung,
wobei der Generator innerhalb einer Gondel angeordnet ist, mit einem Leistungsmodul (7) mit einer ersten Leistungsmoduleinheit (71) und mit Stromleitungsmitteln zur Stromableitung des erzeugten Stroms aus dem Turmkopf,
**dadurch gekennzeichnet, dass** die Stromleitungsmittel (91,92) segmentiert in den Turmsegmenten (21, 22) vormontiert sind und dass die erste Leistungsmoduleinheit in der Gondel (4) angeordnet und über Kabel direkt mit dem Generator (6) verbunden ist.

2. Windenergieanlage nach Anspruch 2,
**dadurch gekennzeichnet, dass** die Stromleitungsmittel mit Haltern an dem Turmsegment befestigt sind.

3. Windenergieanlage nach einem der vorstehenden Ansprüche,
**dadurch gekennzeichnet, dass** die Stromleitungsmittel durch eine Abdeckung, insbesondere ein Abdeckblech, vor Berührung geschützt sind.

4. Winderlergieanlage nach einem der vorstehenden Ansprüche,
**dadurch gekennzeichnet, dass** die Segmente der Stromleitungsmittel nur in einem Bereich, vorzugsweise im in aufgebautem Zustand obersten Bereich mit dem zugehörigen Turmsegment, fest verbunden sind.

5. Wirdenergieanlage nach einem der vorstehenden Ansprüche,
**dadurch gekennzeichnet, dass** die Stromleitungsmittel als Kabel ausgebildet sind.

6. Windenergieanlage nach einem der Ansprüche 1 bis 4,
**dadurch gekennzeichnet, dass** die Stromleitungsmittel als Schienen ausgebildet sind.

7. Windenergieanlage nach Anspruch 6,
**dadurch gekennzeichnet, dass** zur Überbrückung von aus der Innenwand des Turmes herausstehenden Teilen und/oder zur Verbindung von Stromschienensegmenten flexible Verbindungsschienen vorgesehen sind.

8. Windenergieanlage nach einem der vorstehenden Ansprüche, **dadurch gekennzeichnet, dass** das Leistungsmodul (7) die erste Leistungsmoduleinheit (71)
und eine zweite unterhalb des Turmkopfes angeordnete Leistungsmoduleinheit (72) aufweist, und
dass die Stromleitungsmittel zur Stromübertragung von der ersten zur zweiten Leistungsmoduleinheit vorgesehen sind.

9. Windenergieanlage nach einem der vorstehenden Ansprüche,
**dadurch gekennzeichnet, dass** die Stromleitungsmittel zur Stromübertragung vom Generator zum Leistungsmodul vorgesehen sind.

10. Turmsegment für einen au mehreren Turmsegmenten (21,22) aufgebauten Turm (2) einer Windenergieanlage (1), welche im Bereich des Turmkopfes einen Generator (6) zur Stromerzeugung aufweist,
**dadurch gekennzeichnet, dass** in dem Turmsegment ein Stromleitungsmittelsegment (91,92) zur Stromableitung des erzeugten Stroms aus dem Turmkopf vormontiert ist.

## Claims

1. A wind power installation (1) having a tower (2) assembled from a plurality of tower segments (21, 22), having a generator (6) disposed in the region of the top of the tower for generating electric current,
the generator being disposed inside a nacelle, with a power module (7) having a first power module unit (71), and with current-conducting means for conducting the generated current out of the top of the tower,
**characterised in that** the current-conducting means (91, 92) are pre-installed in segmented form in the tower segments (21, 22) and that the first power module unit is disposed in the nacelle (4) and is directly connected to the generator (6) via cables.

2. A wind power installation according to claim 2,
**characterised in that** the current-conducting means are fastened to the tower segment with holders.

3. A wind power installation according to either of the preceding claims,
**characterised in that** the current-conducting means are protected from touch by a cover, especially a cover plate.

4. A wind power installation according to any one of the preceding claims,
**characterised in that** the segments of the current-conducting means are fixedly connected to the associated tower segment only in one region, preferably in the topmost region in the assembled state.

5. A wind power installation according to any one of the preceding claims,
**characterised in that** the current-conducting means are in the form of cables.

6. A wind power installation according to any one of claims 1 to 4,
**characterised in that** the current-conducting means are in the form of bars.

7. A wind power installation according to claim 6,
**characterised in that**, for bridging parts projecting outwards from the inside wall of the tower and/or for connecting busbar segments, flexible connecting bars are provided.

8. A wind power installation according to any one of the preceding claims,
**characterised in that** the power module (7) has the first power module unit (71) and has a second power module unit (72) which is disposed below the top of the tower, and that the current-conducting means are provided for transmitting current from the first to the second power module unit.

9. A wind power installation according to any one of the preceding claims,
**characterised in that** the current-conducting means are provided for transmitting current from the generator to the power module.

10. A tower segment for a tower (2) of a wind power installation (1) assembled from a plurality of tower segments (21, 22), which wind power installation has a generator (6) in the region of the top of the tower for generating electric current,
**characterised in that** a current-conducting means segment (91, 92) for conducting the generated current out of the top of the tower is pre-installed in the tower segment.

## Revendications

1. Centrale éolienne (1) avec une tour (2) constituée de plusieurs segments de tour (21, 22), avec un générateur (6) disposé dans la zone de la tête de la tour pour la génération de courant,
le générateur étant disposé à l'intérieur d'une nacelle, avec un module de puissance (7) avec une première unité de module de puissance (71) et avec des moyens de conduction de courant pour la dérivation du courant généré à partir de la tête de la tour, **caractérisée en ce que** les moyens de conduction de courant (91, 92) sont prémontés segmentés dans les segments de tour (21, 22) et **en ce que** la première unité de module de puissance est disposée dans la nacelle (4) et est reliée directement par des câbles avec le générateur (6).

2. Centrale éolienne selon la revendication 2,
**caractérisée en ce que** les moyens de conduction de courant sont fixés sur le segment de tour au moyen de supports.

3. Centrale éolienne selon l'une des revendications qui précédent, **caractérisée en ce que** les moyens de conduction du courant sont protégés d'un contact par une couverture, en particulier une tôle de couverture.

4. Centrale éolienne selon l'une des revendications qui précèdent, **caractérisée en ce que** les segments des moyens de conduction de courant sont uniquement reliés fixement dans une zone, de préférence dans la zone supérieure à l'état monté avec le segment de tour correspondant.

5. Centrale éolienne selon l'une des revendications qui précèdent, **caractérisée en ce que** les moyens de conduction de courant ont la forme de câbles.

6. Centrale éolienne selon l'une des revendications 1 à 4, **caractérisée en ce que** les moyens de conduction de courant ont la forme de rails.

7. Centrale éolienne selon la revendication 6, **caractérisée en ce que** pour ponter les parties ressortant de la paroi intérieure de la tour et/ou pour relier des segments de rail de courant, des rails de liaison flexibles sont prévus.

8. Centrale éolienne selon l'une des revendications qui précèdent, **caractérisée en ce que** le module de puissance (7) présente la première unité de module de puissance (71) et une deuxième unité de module de puissance (72) disposée au-dessous de la tête de la tour et **en ce que** les moyens de conduction de courant pour la transmission de courant de la première vers la deuxième unité de module de puissance sont prévus.

9. Centrale éolienne selon l'une des revendications qui précèdent, **caractérisée en ce que** les moyens de conduction du courant pour la transmission de courant du générateur au module de puissance sont prévus.

10. Segment de tour pour une tour (2) constituée de plusieurs segments de tour (21, 22) d'une centrale éolienne (1) qui présente, dans la zone de la tête de la tour, un générateur (6) pour la génération de courant, **caractérisé en ce que** dans le segment de tour un segment de moyen de conduction de courant (91, 92) est prémonté pour la dérivation du courant généré à partir de la tête de la tour.
